(19)

**Europäisches Patentamt**
**European Patent Office**
**Office européen des brevets**

(11) **EP 2 439 639 A1**

(12) **EUROPEAN PATENT APPLICATION**
published in accordance with Art. 153(4) EPC

(43) Date of publication:
**11.04.2012 Bulletin 2012/15**

(51) Int Cl.:
*G06F 9/445* (2006.01)  *G06F 9/54* (2006.01)

(21) Application number: **10783189.3**

(86) International application number:
**PCT/JP2010/053627**

(22) Date of filing: **05.03.2010**

(87) International publication number:
**WO 2010/140403 (09.12.2010 Gazette 2010/49)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **02.06.2009 JP 2009132708**

(71) Applicant: **Ubiquitous Corporation Tokyo 160-0023 (JP)**

(72) Inventor: **HASHIMOTO Kenichi Tokyo 160-0023 (JP)**

(74) Representative: **Goddar, Heinz J. Forrester & Boehmert Pettenkoferstrasse 20-22 80336 München (DE)**

(54) **PROGRAM, CONTROL METHOD, AND CONTROL DEVICE**

(57) Provided is a program, control method, and control device that can shorten start-up time. Page table entry is rewritten for a Memory Management Unit (MMU) table, on a computer system equipped with an MMU, so that a page fault will occur at every page, for all the pages necessary for the operation of a software program. Upon start-up, the stored memory image is loaded in page units for page faults that have occurred on the RAM to be accessed. Loading of unnecessary pages will not be executed, because such loading was executed, and the start-up time can be shortened worth that time. This program, control method, and control device can be applied to personal computers, and electronic devices equipped with built-in type computers.

FIG.4

| | | |
|---|---|---|
| 0 | | 207-0 |
| 1 | | 207-1 |
| 2 | | 207-2 |
| 3 | | 207-3 |
| 4 | | 207-4 |
| 5 | | 207-5 |
| 6 | | 207-6 |
| 7 | | 207-7 |
| 8 | | 207-8 |
| 9 | | 207-9 |
| 10 | | 207-10 |
| 11 | | 207-11 |
| 12 | | 207-12 |
| 13 | | 207-13 |
| 14 | | 207-14 |
| 15 | | 207-15 |
| 16 | | 207-16 |
| 17 | | 207-17 |
| 18 | | 207-18 |
| 19 | | 207-19 |
| 20 | | 207-20 |
| n | | 207-n |

Printed by Jouve, 75001 PARIS (FR)

EP 2 439 639 A1

**Description**

TECHNICAL FIELD

The present invention relates to a program, a control method, and a control device, and particularly to a program, a control method, and a control device suitable for controlling activation of software.

BACKGROUND ART

An activation time of a few minutes has been required to activate an OS (Operating System) and to operate desired software in a personal computer. As a method of activating at high speed, there exists a method called hibernation (for example, refer to Patent Document 1).
Patent Document 1 describes that after activation, registers of a CPU (central processing unit) and an I/O (input/output), and RAM (Random Access Memory) images are stored in a hard disk drive (HDD) or a flush memory. In addition, Patent Document 1 also describes that when the computer is activated for the next time, the stored RAM images are returned, and then the registers of the CPU and the I/O are set again. Patent Document 1 proposes that such activation enables high-speed activation of an OS. The method called hibernation based on such a proposal has already been applied to personal computers.
Further, the method of hibernation has been applied even to embedded computers, for example, computers embedded in electronic devices such as TV receivers and hard disk recorders.

Prior Art Document

Patent Document

Patent Document 1: Japanese Patent Application Laid-Open No. 2005-149225
Patent Document 2: Japanese Patent Application Laid-Open No.2007-334383

SUMMARY OF THE INVENTION

PROBLEM TO BE SOLVED BY THE INVENTION

If comparing a case in which an OS is activated by applying the hibernation with a case in which an OS is activated in accordance with normal procedures, the OS can be activated at higher speed by applying the hibernation. However, the size of the RAM images to be stored is increased along with an increase in the capacity of the RAM, resulting in an increase in time required for expanding the RAM images at the time of activation. As a result, it is difficult to activate at high speed along with an increase in the capacity of the RAM.
Further, the performance of a CPU in a personal computer is relatively high. Thus, if the size of the RAM images is increased, the performance of processing the RAM images is secured. However, CPUs that are relatively low in performance are used in many embedded computers. Therefore, if the RAM images are increased in the case of the embedded computers, the activation speed slows down even if the method of hibernation is applied. Specifically, the activation speed in the embedded computers significantly slows down due to an increase in the RAM images.
Further, it has been proposed that the size of the RAM images is reduced by compressing the RAM images. However, it is necessary to expand the compressed images at the time of activation. In consideration of a burden on a CPU related to the expanding process and time required for the expanding process, this method is not effective to make the activation faster.
In consideration of such problems, Patent Document 2 proposes a method in which an OS starts to be executed before all images of hibernation are completely transferred. However, it is necessary to mount special hardware to preliminarily specify a page to be transferred first in the method. Thus, the cost of the special hardware is disadvantageously and additionally incurred.
The present invention has been achieved in view of such circumstances, and can shorten activation time.

MEANS FOR SOLVING THE PROBLEM

According to an aspect of the present invention, provided is a program for a control device having a function of managing memories, the program including the steps of: rewriting page table entries so that a page fault occurs at each page necessary for operations of predetermined software; and sequentially reading the pages at each of which the page fault has occurred by the page table entries when the software is activated.

After the predetermined software is activated, the page table entries are rewritten, and data, program codes, tables, a page fault handler, an interrupt vector, and a register at the time of activation can be stored in the memory.

Among the memories, a RAM stores therein the page table entries to be rewritten, and a nonvolatile memory stores therein the pages to be sequentially read.

The program can be read by an embedded computer.

According to another aspect of the present invention, provided is a control method for a control device having a function of managing memories, the method including the steps of: rewriting page table entries so that a page fault occurs at each page necessary for operations of predetermined software; and sequentially reading the pages at each of which the page fault has occurred by the page table entries when the software is activated.

According to still another aspect of the present invention, provided is a control device having a function of managing memories, the device including: means for rewriting page table entries so that a page fault occurs at each page necessary for operations of predetermined software; and means for sequentially reading the pages at each of which the page fault has occurred by the page table entries when the software is activated.

In a program, a control method, and a control device according to still another aspect of the present invention, page table entries are rewritten so that a page fault occurs at each page necessary for operations of predetermined software; and the pages at each of which the page fault has occurred are sequentially read by the page table entries when the software is activated.

EFFECT OF THE INVENTION

According to the aspects of the present invention, the activation time of an OS can be shortened.

BRIEF DESCRIPTION OF THE DRAWINGS

[Fig. 1] Fig. 1 is a diagram for showing a configuration of an embodiment of an information processing device to which the present invention is applied.

[Fig. 2] Fig. 2 is a diagram for showing a model of an MMU.

[Fig. 3] Fig. 3 is a diagram for explaining a descriptor.

[Fig. 4] Fig. 4 is a diagram for explaining reading of physical pages.

[Fig. 5] Fig. 5 is a diagram for explaining reading of physical pages.

[Fig. 6] Fig. 6 is a diagram for explaining a physical memory map.

[Fig. 7] Fig. 7 is a flowchart for explaining activation processes.

[Fig. 8] Fig. 8 is a flowchart for explaining activation processes.

[Fig. 9] Fig. 9 is a flowchart for explaining activation processes.

[Fig. 10] Fig. 10 is a flowchart for explaining activation processes.

[Fig. 11] Fig. 11 is a flowchart for explaining activation processes.

BEST MODE FOR CARRYING OUT THE INVENTION

Hereinafter, an embodiment of the present invention will be described with reference to the drawings.

In the first place, an outline of the present invention will be described. The present invention relates to a method of activating software, at high speed, such as an OS (Operating System) and an application that runs on a CPU (central processing unit) equipped with a Memory Management Unit (hereinafter, abbreviated as MMU).

Software to be activated at high speed is once activated in accordance with a normal method, and RAM (Random Access Memory) images in this state are stored in a nonvolatile memory or the like. When the RAM images are stored in the nonvolatile memory or the like, an MMU table is rewritten and changed so that a page fault occurs at each page. A page fault handler is prepared in target software. When a page fault occurs, only the page where the page fault has occurred is loaded from the nonvolatile memory.

Every time a program code is executed after arbitrary software is activated, or every time the RAM is accessed to read data necessary for running the software, a page fault occurs, and a necessary page is immediately loaded from the nonvolatile memory to the RAM. Thereby, it is not necessary to preliminarily load all the RAM images from the nonvolatile memory to a main RAM unlike the conventional activation by hibernation, and only essential RAM images necessary for operations can be loaded. Thus, desired software can be activated and operated at high speed.

The applicants found that an activation time of several tens of seconds to a few minutes that has been required to activate an OS and software (hereinafter, simply referred to as software) in the past can be shortened to about a few seconds by using the present invention. The present invention will be concretely described hereinbelow.

[Regarding configuration of information processing device]

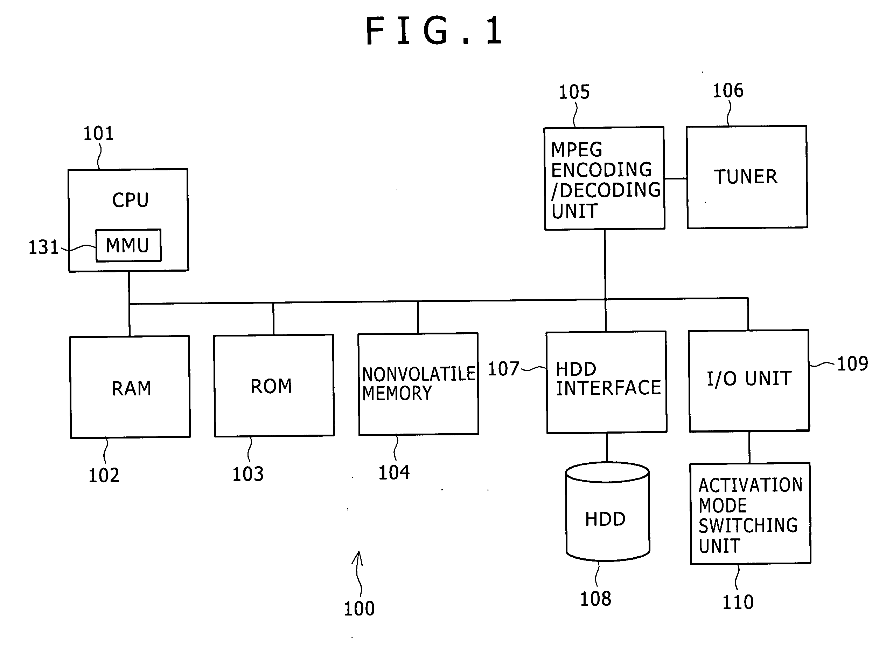

Fig. 1 is a diagram for showing a configuration of an embodiment of an information processing device to which the present invention is applied. The information processing device to which the present invention is applied can be applied to devices having embedded computers as well as personal computers (PCs). The devices having embedded computers include electronic devices such as TV receivers and hard disk recorders. In the embodiment, an example of applying the present invention to a hard disk recorder will be described.

Fig. 1 is a diagram for showing a configuration of a hard disk recorder as an information processing device to which the present invention is applied. A hard disk recorder 100 shown in the drawing includes a CPU 101, a RAM 102, a ROM (Read Only Memory) 103, a nonvolatile memory 104, an MPEG (Moving Picture Experts Group) encoding/decoding unit 105, a tuner 106, an HDD interface 107, an HDD 108, an I/O unit 109, and an activation mode switching unit 110.

The CPU 101 controls the respective units of the hard disk recorder 100. The CPU 101 is equipped with a Memory Management Unit (hereinafter, described as MMU) having a scheme capable of dividing the RAM 102 to be managed in small units (pages). It should be noted that the explanation will be continued on the assumption that an MMU 131 is included in the CPU 101. However, the MMU 131 may be mounted not inside but outside the CPU 101. In addition, the form of the MMU 131 is not particularly limited. However, the MMU 131 is configured to be capable of setting attributes of access permission/inhibition on a page basis and of allowing the exception of a page fault to occur when accessing a page that is not allowed to access. Further, the explanation will be continued on the assumption that the MMU 131 of the CPU 101 manages a page in units of 4 kilobyte (hereinafter, described as 4KB).

The RAM 102 can be configured using an SRAM (Static Random Access Memory), a DRAM (Dynamic Random Access Memory), or the like. The RAM 102 functions as a main storage device used by the CPU 101. Any memory having such a function can be used as the RAM 102.

The ROM 103 is a read-only memory such as a FLASH ROM or a Mask ROM. An OS and application software are stored in the ROM 103, and any type of ROM may be used in the present invention as long as an OS and application software can be stored.

The nonvolatile memory 104 is a memory that holds stored content even if the power of the hard disk recorder 100 is turned off. For example, the nonvolatile memory 104 can be configured using a FLASH ROM, an SRAM with a backup function, a DRAM, or the like.

Into the nonvolatile memory 104, stored are memory images of software stored in the RAM 102 after the software, to be described later, is activated. Therefore, the capacity of the nonvolatile memory 104 is preferably larger than that of the RAM 102. However, in the case where data are reduced in size by data compression or the like, the capacity of the nonvolatile memory 104 may be equal to or smaller than that of the RAM 102. Further, the nonvolatile memory 104 can double as the HDD 108 (the HDD 108 can be used as the nonvolatile memory 108).

The MPEG encoding/decoding unit 105 compresses and expands moving images. The moving images are supplied via the tuner 106. The tuner 106 selects one moving image among plural programs (moving images) on the basis of an instruction by a user, and supplies the same to the MPEG encoding/decoding unit 105. The MPEG encoding/decoding unit 105 supplies data from the tuner 106 to the HDD 108 via the HDD interface 107 if necessary, or receives data from the HDD 108 via the HDD interface 107. Further, the MPEG encoding/decoding unit 105 encodes or decodes the data if necessary when supplying or receiving the data.

The I/O unit 109 is provided to allow the CPU 101 to read the status of the activation mode switching unit 110. The software to be described below has a normal activation mode in which a high-speed activation image is obtained, and a high-speed activation mode as an activation mode after the high-speed activation image is obtained. The I/O 109 and the activation mode switching unit 110 are used to switch between these activation modes. In order to switch between the normal activation mode and the high-speed activation mode, the activation mode switching unit 110 can be configured using a switch. Further, in order to switch between the normal activation mode and the high-speed activation mode, the activation mode switching unit 110 can be configured to be switched with a command from a bootloader or the like.

Further, once the high-speed activation image is produced, the normal activation mode is not necessary. Thus, only the high-speed activation mode may be implemented while eliminating the switching function between the normal activation mode and the high-speed activation mode. In the case where such a configuration is employed, the I/O unit 109 and the activation mode switching unit 110 may be omitted.

[Regarding MMU]

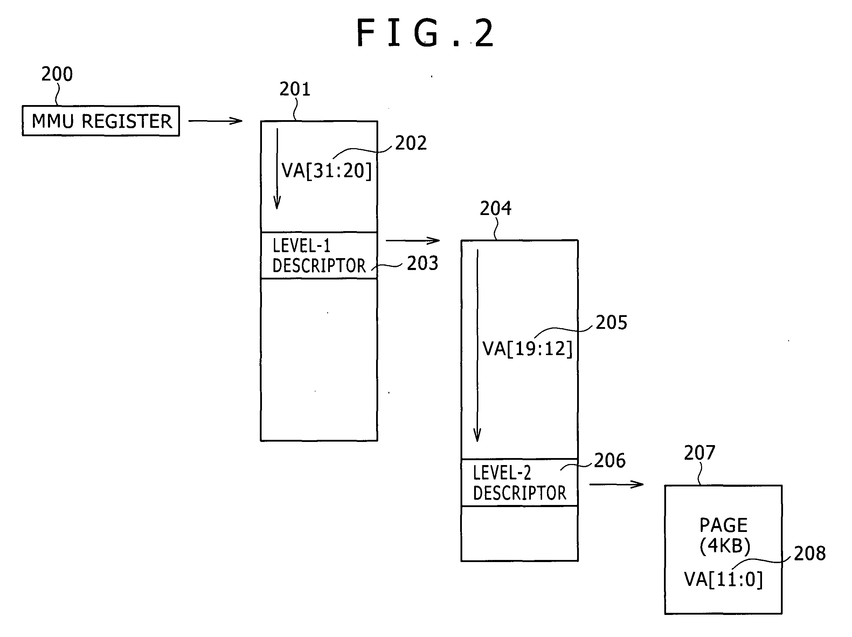

Fig. 2 is a diagram for showing a model of the MMU 131 equipped in the CPU 101. The MMU 131 shown in Fig. 2 is a model equipped in the 32-bit CPU 101 or the more advanced CPU 101. The configuration, the physical address, the virtual address, the number of bits used for indexes of each table, and the number of columns of each table of the MMU 131 are dependent on the manufacturer of the CPU 101. However, these are not particularly dependent on the architecture of the manufacturer. For the convenience of explanation, the embodiment will be described using an example of a concrete number such as 32-bit. However, the number is not intended to limit the applicable range of the present invention.

The MMU 131 implements access permission or a function corresponding to access permission in attributes for entries in a table designating the final physical page, and at least has a function of allowing a page fault or an exception process corresponding to the page fault to occur when accessing in an unpermitted condition.

An MMU register 200 is a register equipped in the MMU 131. The initial address of a level-1 descriptor table 201 is assigned to the register. The level-1 descriptor table 201 is a level-1 memory table on a memory. In the case of a 32-bit physical address space, 32 bits, namely, 4 bytes are used to designate one address, and thus the size of the level-1 descriptor table 201 corresponds to 16KB obtained by using an equation of 12-bit space=4KB space×4 bytes.

The virtual address 202 indicates from 31-bit to 20-bit of a virtual address used as an index for the level-1 memory table. VA means a virtual address. When accessing a predetermined virtual address, 31-bit to 20-bit of the virtual address from the initial address of the level-1 descriptor table 201 are used as an index to access a level-1 descriptor 203.

In the case of the CPU 101 with a 32-bit physical address space, 32 bits, namely, 4 bytes are used to designate one address. Thus, the address of the level-1 descriptor is represented by the following equation.

```
Address of level-1 descriptor 203

    = initial address of level-1 descriptor table 201

    + virtual address 202 (VA [31:20]) × 4
```

The level-1 descriptor 203 is a descriptor including a pointer for designating the initial address of a level-2 descriptor table 204 and attributes. 19-bit to 12-bit of the virtual address from the initial address of the level-2 descriptor table 204 are used as an index to access a level-2 descriptor 206.

In the case of the CPU 101 with a 32-bit physical address space, 32 bits, namely, 4 bytes are used to designate one address. The address of the level-2 descriptor is represented by the following equation.

```
Address of level-2 descriptor 206


    = initial address of level-2 descriptor table 204

    + virtual address 205 (VA [19:12]) × 4
```

The level-2 descriptor 206 is a descriptor including a pointer for indicating a 4KB physical page 207 and attributes. The physical page 207 is a physical memory of one page obtained by finally converting from the virtual address to the physical address. The address within 4KB of the physical page 207 is designated by a virtual address 208 (VA [11:0]).

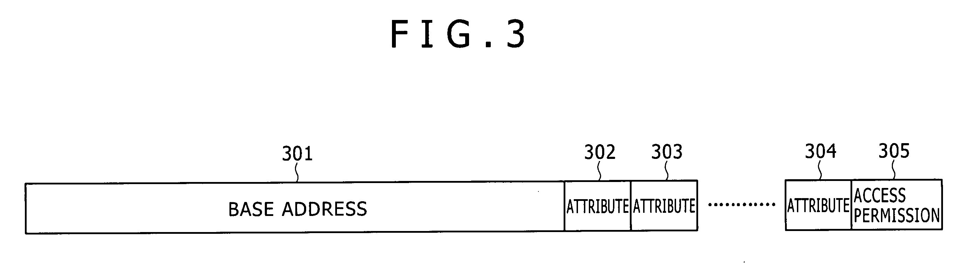

Fig. 3 shows an example of the level-1 descriptor 203 or the level-2 descriptor 206. The descriptor in Fig. 3 is an example, and the present invention is not dependent on the specific CPU 101 or architecture shown in such an example.

A base address 301 is a pointer for indicating the initial address of the next table or a physical page. Each of attributes 302 to 304 is an attribute bit for showing an attribute such as executable/inexecutable or a privileged mode/ user mode. An access permission bit 305 is a bit for indicating whether or not access to the physical page indicated by the descriptor is permitted. When accessing the physical page that is set as access inhibition in the access permission bit 305, an exception process called a page fault, namely, an interrupt process is generally executed, and thus such a mechanism is necessary. Accordingly, although not dependent on the architecture of the CPU 101, it is necessary for the CPU 101 to be equipped with the page fault or a function corresponding to the page fault.

[Regarding physical page]

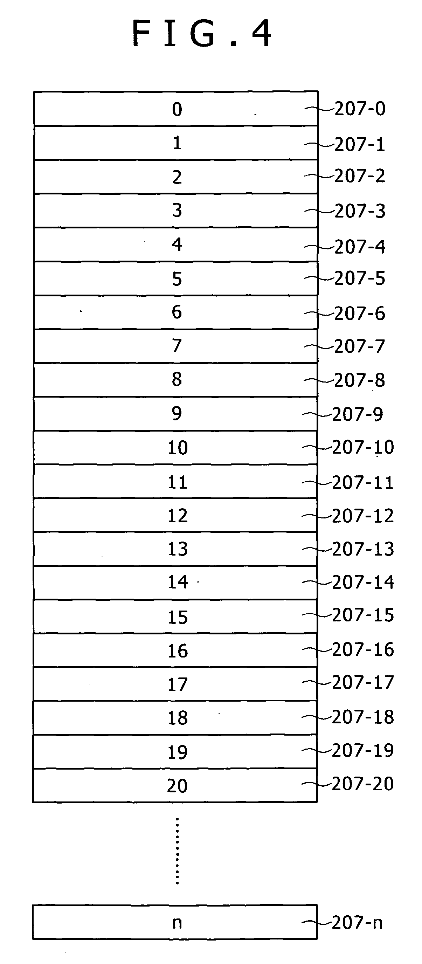

Fig. 4 is a diagram for showing a pseudo state in which the physical pages 207 are arranged on the RAM 102 (Fig. 1). On the RAM 102, the physical page 207 corresponds to one page, and the physical pages 207 are sequentially arrayed from a physical page 207-0 to a physical page 207-n. When software runs on the CPU 101 equipped with the MMU 131, the physical page 207 of one page is configured to be managed in units of 4KB to 64KB per page in many cases.

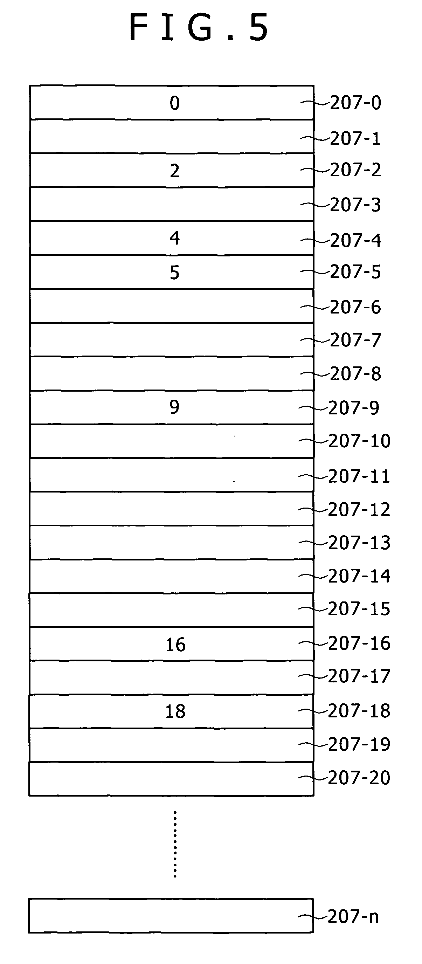

Fig. 5 is a diagram for explaining usage statuses of the physical pages when software is in a predetermined operation status. In Fig. 5, pages for which numbers are written are being used and pages for which no numbers are written are not being used. Even when program codes and data used by the software use all areas as shown in Fig. 4, the areas are used as shown in Fig. 5 in many cases when observing the status of the software in a certain unit of time. Specifically, some pages are being used while others are not being used, and all the pages are not necessarily being used.

When the software is in a predetermined operation status, the physical page 207-0, the physical page 207-2, the physical page 207-4, the physical page 207-5, the physical page 207-9, the physical page 207-16, and the physical page 207-18 are used. Specifically, the physical page 207 corresponds to one page, and the physical pages 207 are sequentially arrayed from the physical page 207-0 to the physical page 207-n on the RAM 102 as shown in Fig. 4. However, when predetermined software is in a predetermined operation status, all the pages are not used, but only plural pages are used as shown in Fig. 5.

In the case of conventional activation by hibernation, the physical page 207-0 to the physical page 207-n as shown in Fig. 4 are sequentially read to start a return operation prior to operations of software, and the software is set in a predetermined operation status. However, in order to actually set the software in a predetermined operation status, it is only necessary to read predetermined plural physical pages 207 as shown in Fig. 5. Accordingly, only necessary physical pages 207 as shown in Fig. 5 are read by read control, to be described later, in the present invention.

In the case of conventional activation by hibernation, the physical pages are sequentially read from the physical page 207-0 as shown in Fig. 4. In other words, unnecessary physical pages 207 are also read. Thus, it takes time to read, resulting in slow activation of predetermined software (including an OS or the like). However, only the necessary physical pages 207 as shown in Fig. 5 are read according to the present invention. Thus, the reading time can be shortened, and predetermined software (including an OS or the like) can be quickly activated.

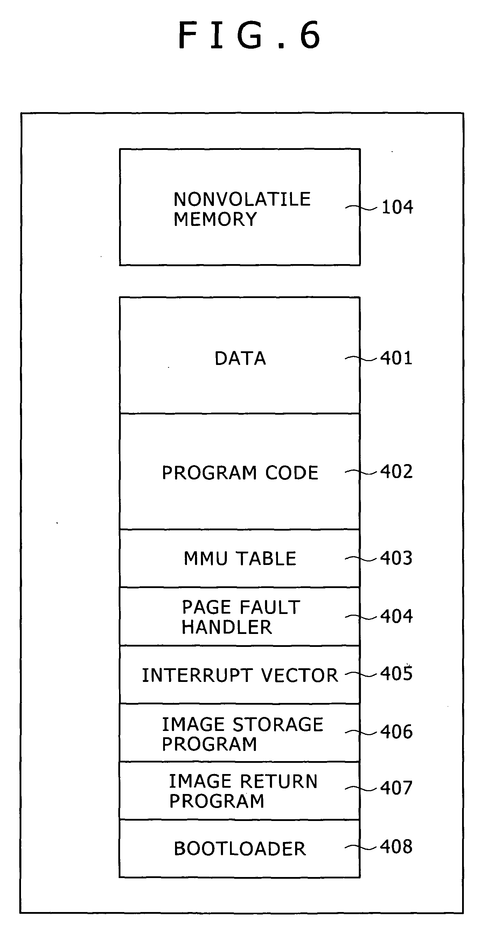

Fig. 6 is a diagram for showing a physical memory map of software. It should be noted that processes to be described below are dependent on the CPU 101 or an OS. If these functions are implemented, the configuration and memory arrangement are not limited, and the present invention is not applied only to the following description.

The nonvolatile memory 104 is a memory that holds stored content even if the power is turned off. In the example shown in Fig. 6, a FLASH ROM is imaged as the nonvolatile memory 104. The nonvolatile memory 104 is mapped on a main memory. Even if the power is turned off, the content is held, and the capacity thereof is larger than that of the RAM 102. However, it is not always necessary to map the nonvolatile memory 104 to which the present invention can be applied on a memory map to be accessed via an I/O, and the architecture thereof is not limited.

Data 401 is a readable/writable data area used by a program code 402. The data 401 is divided into specific sizes to be stored as the physical pages 207. The data 401 needs to be read and written, and thus is preferably provided on the RAM 102.

The program code 402 indicates a desired program to be activated and executed. In the case of software running on an OS, such as Windows (registered mark) or Linux, installed on a general personal computer, the programs include the OS and software. The program code 402 is divided into specific sizes to be stored as the physical pages 207. The program code 402 is provided on the RAM 102 or the ROM 103.

An MMU table 403 indicates the level-1 descriptor table 201 and the level-2 descriptor table 204 shown in Fig. 2. A page fault handler 404 is a program for performing an exception process via an interrupt vector when the level-2 descriptor 206 of the MMU 131 is of the access inhibition attribute and a page fault occurs. In this example, the program code 402 and the page fault handler 404 are separately described. However, the page fault handler 404 is included in the program code 402 in some cases.

An interrupt vector 405 is an interrupt vector held by a general CPU. When a page fault occurs, the program code is jumped to a page fault in the interrupt vector, and as a result, the page fault handler 404 is called.

The physical addresses corresponding to the logical addresses of the data 401, the program code 402, the MMU table 403, and the interrupt vector 405 can be mapped to arbitrary addresses.

An image storage program 406 is a program to store memory images into the nonvolatile memory 104 in a desired status after a desired program is activated. The logical address and the physical address of the image storage program 406 need to be mapped to the same address.

An image return program 407 is a program that reads the physical memory images stored by the process of the image storage program 406 in physical page units if necessary from the nonvolatile memory 104 to be returned, and that reads the data 401 and the program code 402 to the corresponding physical page from the nonvolatile memory 104 to be returned. The logical address and the physical address of the image return program 407 need to be mapped to the same address.

A bootloader 408 is a bootloader that is initially activated after the power is turned on or reset. The bootloader 408 mainly performs initialization of minimum I/Os necessary for activation. The software has such a configuration.

[Regarding operation of software]

Next, an operation of software to which the present invention is applied will be described. In the first place, the outline thereof will be described, and then the details thereof will be described. According to the present invention, software can be activated at high speed by using the locality of the software. The software includes an OS and the like. For example, it is assumed that predetermined software is allowed to run on hardware equipped with an RAM having a capacity of 4GB, and the total capacity of programs and data of the predetermined software is 4GB. Software generally has various modes and functions, and it is extremely improbable that the full capacity of 4GB is used by a predetermined single function.

For example, it is assumed that the software waits for a key entry by a user in a specific status after activation. In general, after hardware is reset, the bootloader is activated and the software is started to wait for a key entry by a user. In the case where the software is activated at high speed by hibernation that is a well-known technique, registers of a CPU and each I/O are stored as preparation of producing memory images while the software waits for a key entry by a user, and 4GB of program codes and data in total is stored in any one of nonvolatile memories. At the time of activation, the processes are performed in such a reversed way that normal activation processes are not performed, the 4GB memory is expanded, and the registers of the CPU and each I/O are returned to be returned to the key entry process.

The state of "waiting for an entry by a user" in the software is to be considered. In this state, key entry operations are repeated, and program codes and data related to such key entry operations are relatively small in size. The present invention realizes high-speed activation using this principle. The operations are roughly divided into the followings.

(A) An OS and desired software are activated in the normal activation mode, and the software is set in a desired state.
(B) The image storage program is activated, predetermined information is rewritten into information representing access inhibition in order to inhibit access to all the page tables of the MMU 131 by the activated image storage program, and then the memory images in the status (A) are stored in a register before completion.
(C) For the next time or later, the software is activated in the desired status (A) by being switched to the high-speed activation mode.

As basic preparation to realize such high-speed activation, software is activated in accordance with normal procedures, and is set in a desired status. Thereafter, the memory images and registers are stored. Unlike activation by hibernation, all the memory images are not expanded in a main memory at the time of high-speed activation, but a memory to be actually used, namely, a part of program codes and data is expanded little by little if necessary.

As a method of expanding the program codes and memory little by little into the main memory, the embodiment employs and explains an example of using the Memory Management Unit (the MMU 131) equipped in the CPU. Some OSs use the MMU 131. However, the software to which the present invention is applied returns the MMU 131 before the OS uses the MMU 131, and the OS has no concern with the fact that the software to which the present invention is applied operated the MMU 131.

Specifically, the content of the table of the MMU 131 is rewritten before the memory images are stored, and all the pages are set as access inhibition. Further, the software to which the present invention is applied has a function of giving a mark indicating that the pages are set as access inhibition.

This also applies to a case in which desired software runs on an OS and the OS uses the MMU 131. At the time of high-speed activation, only the tables of the MMU 131 and the registers of the CPU are returned first, and then are returned to the addresses after the memory images are produced. All the tables of the MMU 131 are set as access inhibition, and thus a page fault occurs when jumping to the return address. The process is performed in the same way at the time of data access. The page fault handler 404 that processes a page fault calculates a page using the address where the page fault has occurred, and checks the mark marked by the software to which the present invention is applied. Then, the page fault handler 404 reads the page from the nonvolatile memory 104 to the main memory (for example, the RAM 102), and the tables of the MMU 131 are rewritten into the original states before rewriting.

Even in the case of large-volume memory images, it is only necessary to read minimum memory images in order to return to a desired state, and thus high-speed activation can be realized by repeating such processes.

[Regarding details of operation]

As described above, according to the present invention, desired software can be activated up to a certain status at high speed as compared to normal activation. The procedures of activating at high speed are roughly classified into three categories (A), (B) and (C) as simply described above. The explanation will be further given to (A), (B), and (C) before explanation with reference to flowcharts. Once a series of operations in (A) and (B) are executed, these operations are not needed to be executed every time. In general, the software can be activated at high speed starting from (C).

(A) Normal activation

(A-1) The activation mode switching unit 110 is set in the normal activation mode, and an OS and desired programs are activated in accordance with normal procedures.
(A-2) After the desired programs are activated, the software is operated to be set in a desired status. At the time of high-speed activation, the software is activated in this status.

(B) Storage of status

(B-1) The image storage program 406 is activated with any one of keys and commands. The activation method related to the activation is not particularly limited.
(B-2) The image storage program 406 stores the memory images and registers to activate the software at high speed for the next time or later. Specifically, the image storage program 406 sets all the tables of the MMU 131 to the access inhibition status, and stores the data 401, the program code 402, the MMU table 403, the page fault handler 404, the interrupt vector 405, the registers, and the like at this time in the nonvolatile memory 104.

(C) High-speed activation

(C-1) The activation mode switching unit 110 is set in the high-speed activation mode. The bootloader 408 determines the activation mode. In the case of the high-speed activation mode, the bootloader 408 calls the image return program 407. The image return program 407 returns the MMU table 403, the page fault handler 404, and the interrupt vector 405 stored by the image storage program 406.
(C-2) The program code returns, namely, jumps to the address after the image storage program 406 is activated in the process of B-1. Since all the tables of the MMU 131 are set at the access inhibition status, a page fault occurs at each corresponding address, and the page fault handler 404 is called every time the program code 402 and the data 401 are accessed.
(C-3) The page fault handler 404 reads one page of the corresponding physical page 207 from the nonvolatile memory 104 to be returned to the MMU 131.
(C-4) The page faults occur one after another, and necessary page faults continuously occur until the software becomes the status A-2.
(C-5) The physical pages 207 are read until the software becomes the status A-2. The number of the physical pages 207 read in this process is extremely small, although the number depends on software to be executed and the status thereof. Thus, activation time can be significantly shortened as compared to reading all the physical pages 207 in the conventional hibernation technique.

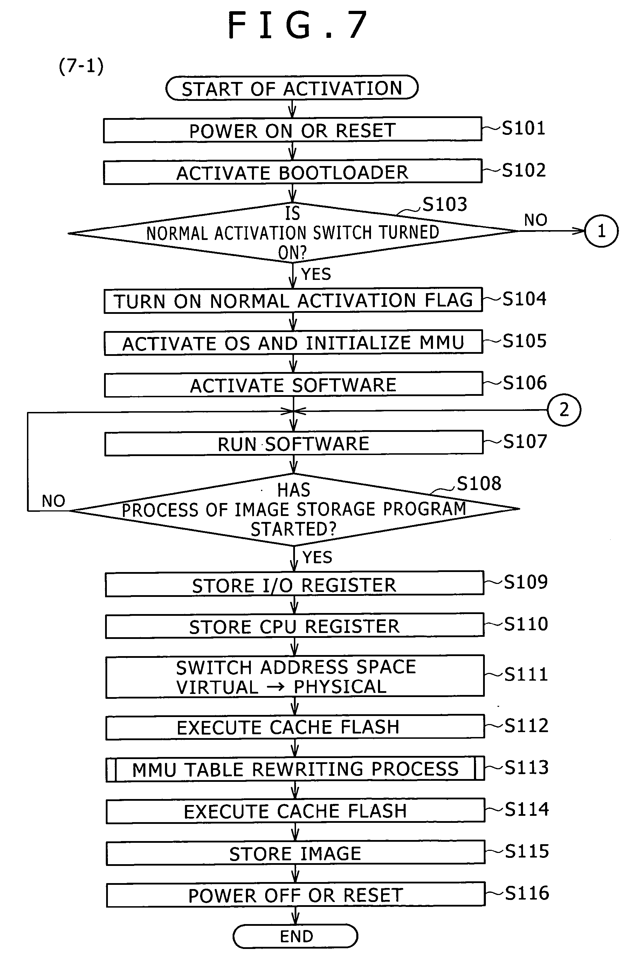

The explanation will be further given to the respective operations of (A), (B), and (C) with reference to flowcharts of Figs. 7 to 11.
The flowchart of Fig. 7 corresponds to the processes of (A) and (B). Specifically, the flowchart of Fig. 7 mainly relates to processes from the time the power is turned on to the time the images are stored. In Step S101, the power of the hard disk recorder 100 (Fig. 1) is turned on, or the hard disk recorder 100 is reset to start the system.
In Step S102, the bootloader 408 (Fig. 6) is activated. The bootloader 408 activated in Step S102 may be a bootloader that can execute assumed processes such as initialization of minimum hardware to operate an OS and desired software and transfer of software stored in the ROM 103 or the HDD 108 to the RAM 102 if necessary. The bootloader 408 is dependent on a system, but is not essential. Thus, Step S102 is omitted in some systems.
In Step S103, the status of the activation mode switching unit 110 is checked, transition of the normal activation mode or the high-speed activation mode is switched (it is determined whether or not the normal activation switch is turned on). If the activation mode switching unit 110 is in the normal activation mode, the flow proceeds to Step S104.

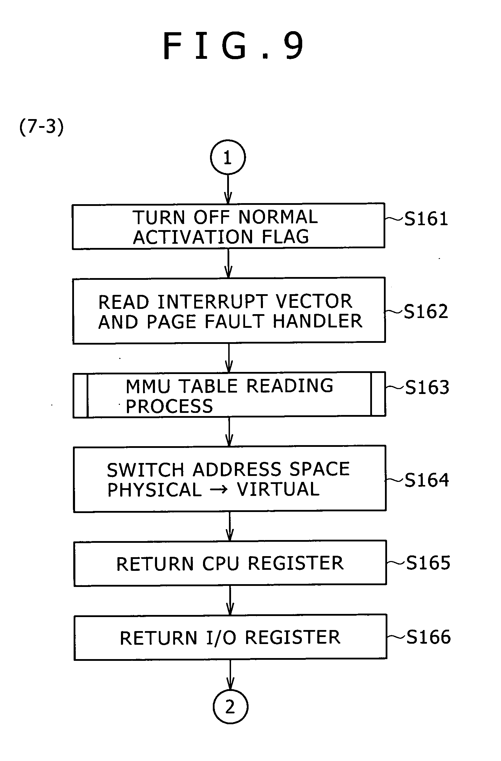

If the activation mode switching unit 110 is in the high-speed activation mode, the flow proceeds to Step S161 (Fig. 9).

If it is determined in Step S103 that the normal activation switch is turned on, a normal activation flag is turned on to activate the software in the normal activation mode. If the normal activation flag is turned on, the flow proceeds to Step S105 to activate an OS if the OS is installed in the system. In the case where an OS is activated in a general system, the MMU 131 is initialized to produce the tables of the MMU 131 of Fig. 2. In the present invention, it is not essential to install an OS. However, in the case of a system in which no OS is installed, it is necessary to initialize the MMU 131. Further, in the case of a system in which an OS is installed, the type of OS is not limited.

In Step S106, desired software to be activated at high speed is activated. In Step S107, the activated software runs. This process corresponds to the process of A-2. The software is transited to the same status in which the software was activated at high speed. For example, if desired software is to be activated at high speed in one of plural modes, the software is operated to be transited to the mode. For example, the hard disk recorder 100 has a reservation mode, a reproducing mode, a setting mode, and the like. If a user frequently uses the reproducing mode, the software is transited to the reproducing mode.

In Step S108, it is determined whether or not the process of the image storage program 406 (Fig. 6) has started. This process corresponds to the process of B-1. The process of the image storage program 406 starts with a command, a key operation, or a switch. Means for executing the image storage program 406 is not limited. If it is determined in Step S108 that the process of the image storage program 406 (Fig. 6) has not started yet, the flow returns to Step S107 to repeat the processes thereafter. Specifically, the operation of the software is continued in this case.

On the other hand, if it is determined in Step S107 that the process of the image storage program 406 (Fig. 6) has started, in other words, if it is determined that the operation of the software has been completed, the flow proceeds to Step S109. The following processes in Steps S109 to S116 correspond to the process of B-2. Further, the processes in Steps S109 to S116 are performed by the image storage program 406.

In Step S109, the registers of the I/O unit 109 shown in Fig. 1 are stored. Basically, the set values are obtained and stored. The specification of the I/O is not necessarily adapted to be capable of reading all the registers. Thus, if the I/O cannot read all the registers, it is necessary to respond to each case. It should be noted that the type and specification of I/O can be arbitrarily selected, and are not particularly limited in applying the present invention.

In Step S110, the registers of the CPU 101 are stored. Basically, all the registers of the CPU 101 are stored. The types of the CPU 101 and the registers can be arbitrarily selected, and are not particularly limited in applying the present invention.

In Step S111, an address space is switched. The CPU 101 usually runs in a virtual address mode. The virtual address mode is transited to a physical address mode. A transition method from the virtual address mode to the physical address mode is dependent on the architecture of the MMU 131. Thus, the transition method is not limited in applying the present invention. Further, if the virtual address mode is transited to the physical address mode, the address space is changed. Thus, the logical address and the physical address need to be mapped to the same address apace in the process of Step S111.

In Step S112, caches are flushed. If the CPU 101 is equipped with a TLB (Translation Look-aside Buffer), a primary cache, and a secondary cache all of which are effective, the TLB and the caches need to be flushed. This is because the content of the MMU table 403 on the RAM 102 needs to be rewritten in the next Step S113, and all data stored in the caches need to be reflected on the RAM 102. The cache flush process in Step S112 is performed if necessary, and may be omitted in some cases.

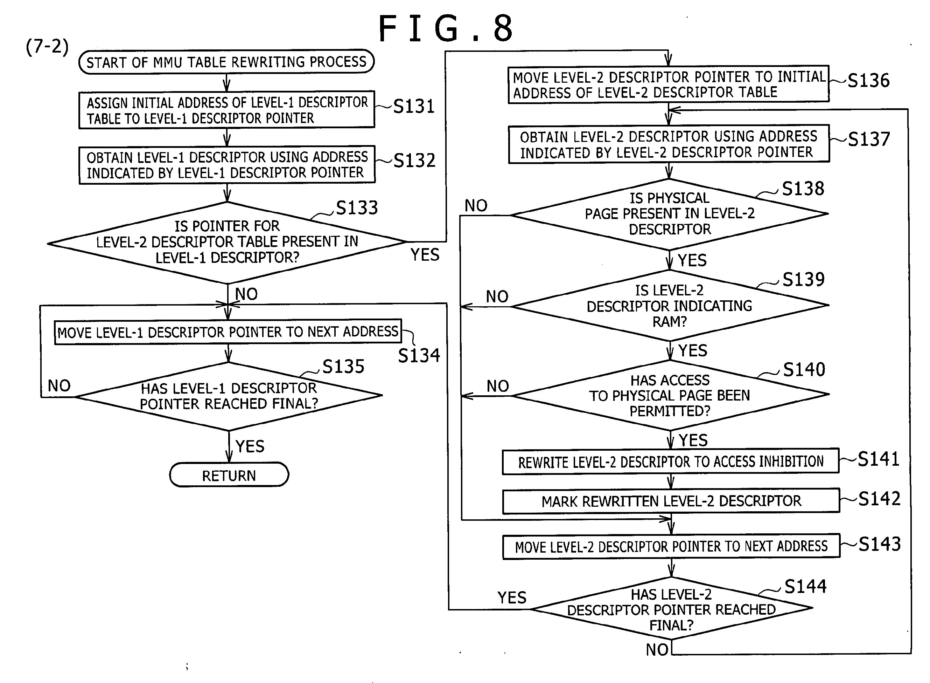

In Step S113, the MMU table 403 of the MMU 131 is rewritten so that access to all the physical pages 207 is inhibited. The MMU table rewriting process in Step S113 will be described later with reference to the flowchart of Fig. 8.

If the MMU table 403 of the MMU 131 is rewritten in Step S113, the flow proceeds to the process of Step S114. In Step S114, the caches are flushed. If the CPU 101 is equipped with the TLB, the primary cache, and the secondary cache all of which are effective, the TLB and the caches need to be flushed. This is because the content of the MMU table 403 of the MMU 131 rewritten by the process in the previous Step S113 is certainly reflected on the RAM 102. The cache flush process in Step S114 is performed if necessary, and may be omitted in some cases.

In Step S115, all the content of all the capacity of the RAM 102 is stored into the nonvolatile memory 104. The address position of the nonvolatile memory 104 relative to the address of the RAM 102 needs to be matched. For example, it is assumed that the physical address of the RAM 102 is mapped from Ox10000000 to Ox1fffffff. In this case, for example, it is necessary to read data from the nonvolatile memory 104 using an address of Ox40000000 to Ox4fffffff.

In the case of this example, the offset of the nonvolatile memory 104 to the address of the RAM 102 is Ox30000000. Even the address of the RAM 102 can be converted to an address in the nonvolatile memory 104 only by adding the offset of Ox30000000. It is not always necessary to map the nonvolatile memory 104 on a memory map. It is only necessary to read with the address to which the offset is added as a key. Further, a method of storing into the nonvolatile memory 104 is dependent on the architecture. However, the storing method is not limited in applying the present invention.

In Step S116, the process of the image storage program 406 is completed. If the process of the image storage program 406 is completed, the power can be turned off or reset.

In the flowchart shown in Fig. 7, a process performed when it is determined in Step S103 that the normal activation switch is not turned on and the MMU table rewriting process in Step S113 are left not being explained. However, the MMU table rewriting process in Step S113 will be described first in detail with reference to the flowchart of Fig. 8.

The process on the basis of the flowchart shown in Fig. 8 is to rewrite the MMU table 403 of the MMU 131 that is configured as shown in Fig. 2.

When rewriting of the MMU table 403 of the MMU 131 starts in Step S131, the initial address of the level-1 descriptor table 201 is first assigned to a variable level-1 descriptor pointer. In Step S132, the level-1 descriptor 203 is obtained using the address indicated by the variable level-1 descriptor pointer.

In Step S133, it is determined whether or not a pointer for the level-2 descriptor table 204 is present in the level-1 descriptor 203 obtained in the process of Step S132. If it is determined in Step S133 that the pointer for the level-2 descriptor table 204 is present in the level-1 descriptor 203, the flow proceeds to Step S136. If it is determined that the pointer for the level-2 descriptor table 204 is not present in the level-1 descriptor 203, the flow proceeds to Step S134.

In Step S134, the variable level-1 descriptor pointer is moved to the address of the next level-1 descriptor pointer. Then, the flow proceeds to Step S135 to determine whether or not the level-1 descriptor pointer has reached the final.

Until it is determined in Step S135 that the level-1 descriptor pointer has reached the final; the flow returns to Step S134 to repeat the process in which the variable level-1 descriptor pointer is moved to the address of the next level-1 descriptor pointer. Then, if it is determined in Step S135 that the level-1 descriptor pointer has reached the final, the flow proceeds to Step S114 (Fig. 7). Specifically, it is determined that the rewriting of the MMU table has been completed, and the flow returns to the process of the flowchart shown in Fig. 7.

On the other hand, if it is determined in Step S133 that the pointer for the level-2 descriptor table 204 is present in the level-1 descriptor 203, the flow proceeds to Step S136. In Step S136, the initial address of the level-2 descriptor table 204 is assigned to a variable level-2 descriptor pointer.

In Step 137, the level-2 descriptor 206 is obtained using the address indicated by the variable level-2 descriptor pointer. In Step S138, it is determined whether or not the physical page 207 is present in the level-2 descriptor 206 obtained in the process of Step S137. If it is determined in Step S138 that the physical page 207 is present in the obtained level-2 descriptor 206, the flow proceeds to Step S139. If it is determined that the physical page 207 is not present in the obtained level-2 descriptor 206, the flow proceeds to Step S143.

In Step S139, it is determined whether or not the physical page 207 in the level-2 descriptor 206 obtained in the process of Step S137 is within a range of the address in the RAM 102 for storing in Step S115 (Fig. 7). If it is determined in Step S139 that the physical page 207 in the level-2 descriptor 206 is within a range of the address in the RAM 102 for storing, the flow proceeds to Step S140. If it is determined that the physical page 207 in the level-2 descriptor 206 is not within a range of the address in the RAM 102 for storing, the flow proceeds to Step S143.

In Step S140, the access permission bit (access permission bit 305 in Fig. 3) of the level-2 descriptor 206 obtained in Step S137 is checked to determine whether or not access to the physical page 207 is permitted. If it is determined in Step S140 that access to the physical page 207 is permitted, the flow proceeds to Step S141. If it is determined that access to the physical page 207 is not permitted, the flow proceeds to Step S143.

In Step S141, the access permission bit 305 of the level-2 descriptor 206 obtained in the process of Step S137 is rewritten into a bit representing access inhibition. Then, the rewritten level-2 descriptor 206 is marked in Step S142. This process is performed to store information (marking) for identifying whether the access permission bit 305 of the level-2 descriptor 206 obtained in the process of Step S137 has been rewritten by the software to which the present invention is applied, or by another piece of software, for example, a normal operation of an OS.

The marking method in Step S142 is dependent on the architecture, and is not limited in applying the present invention. For example, if there is an available bit that is not used in the level-2 descriptor 206, the available bit can be used as a bit to which marking information is embedded. Further, another table may be provided to manage marked and unmarked sections. In any case, by providing a mechanism in which the both can be used, the present invention can be applied to a system in which an OS is installed and uses these bits.

In Step S143, the variable level-2 descriptor pointer is moved to the address of the pointer of the next level-2 descriptor 206. The process of Step S143 is performed if it is determined in Step S138 that the physical page 207 is not present in the level-2 descriptor 206, if it is determined in Step S139 that the level-2 descriptor 206 does not indicate the RAM 102, or if it is determined in Step S140 that access to the physical page 207 is not permitted.

In Step S144, it is determined whether or not the level-2 descriptor pointer has reached the final. Until it is determined in Step S144 that the level-2 descriptor pointer has reached the final, the flow returns to Step S137 to repeat the processes thereafter. On the other hand, if it is determined in Step S144 that the level-2 descriptor pointer has reached the final, the flow proceeds to Step S134. The processes after Step S134 have already been described, and thus the explanation thereof is omitted.

As described above, the MMU table 403 of the MMU 131 is rewritten.

Next, processes at the time of high-speed activation will be described. The high-speed activation is executed when it is determined in Step S103 that the normal activation switch is not turned on, namely, the switch is switched to the high-speed activation. The flowchart of Fig. 9 is executed when it is determined in Step S103 that the normal activation switch is not turned on, and explains the processes at the time of high-speed activation.

In Step S161, the normal activation flag is turned off (the high-speed activation flag is turned on) to activate in the high-speed activation mode. In Step S162, the interrupt vector 405, the page fault handler 404, and the MMU table 403 are read, if necessary, to the same address of the RAM 102 at which the images were stored.

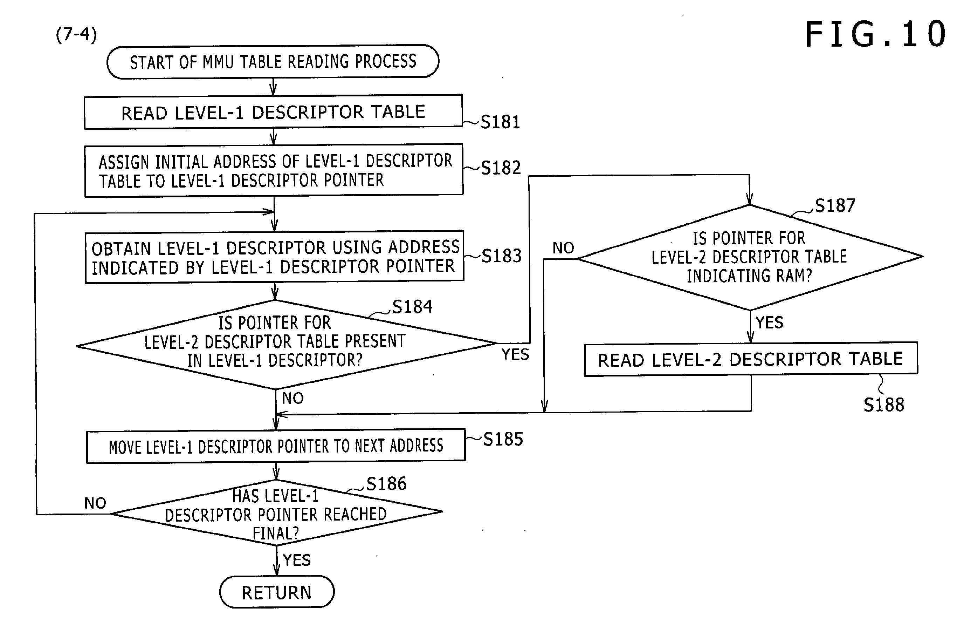

In Step S163, the MMU table of the MMU 131 is read. The MMU table reading process executed in Step S163 will be described below with reference to the flowchart of Fig. 10.

If the reading of the MMU table is completed, the flow proceeds to Step S164. In Step S164, the physical address mode of the address space of the CPU 101 is transited to the virtual address mode. If the physical address mode is transited to the virtual address mode, the address space is changed. Thus, the logical address and the physical address are mapped to the same address space in the process of Step S164.

In Step S165, the value of the register of the CPU 101 stored in Step S110 (Fig. 7) is read from the nonvolatile memory 104 to be returned to the CPU 101. The types of the CPU 101 and register can be arbitrarily selected, and are not limited in applying the present invention.

In Step S166, the value of the register of the I/O stored in Step S109 (Fig. 7) is read from the nonvolatile memory 104 to be returned to the I/O unit 109. The type and specification of I/O can be arbitrarily selected, and are not limited in' applying the present invention.

If the registers and the like are returned in such a manner, the flow proceeds to Step S107 (Fig. 7). In Step S107, the software runs. In this case, the processes of Steps S104 to S106 are not executed, and the software starts to run in Step S107. Accordingly, at least time required until the software can start to run can be shortened by time required in execution of the processes of Steps S104 to S106. In particular, time required activating the OS and initializing the MMU in Step S105 and time required to activate the software in Step S106 can be eliminated. Thus, it can be expected that time is significantly shortened.

Referring back to the flowchart of Fig. 9, the details of the MMU table reading process executed in the Step S163 will be described with reference to the flowchart of Fig. 10.

When reading of the MMU table 403 starts in Step S181, first, the level-1 descriptor table 201 is read. The content of the RAM 102 is stored in the nonvolatile memory 104 in the process of Step S115 (Fig. 7), and only the level-1 descriptor table 201 is read from the content stored in the nonvolatile memory 104.

In Step S182, the initial address of the level-1 descriptor table 201 is assigned to the variable level-1 descriptor pointer. In Step S183, the level-1 descriptor 203 is obtained using the address indicated by the variable level-1 descriptor pointer. In Step S184, it is determined whether or not a pointer for the level-2 descriptor table 204 is present in the level-1 descriptor 203 obtained in the process of Step S183.

If it is determined in Step 184 that the pointer for the level-2 descriptor table 204 is present in the obtained level-1 descriptor 203, the flow proceeds to Step S187. If it is determined that the pointer for the level-2 descriptor table 204 is not present in the obtained level-1 descriptor 203, the flow proceeds to Step S185.

In Step S185, the variable level-1 descriptor pointer is moved to the address of the next level-1 descriptor pointer. Then, in Step S186, it is determined whether or not the level-1 descriptor pointer has reached the final. In Step S186, if it is determined that the level-1 descriptor pointer has reached the final, the flow proceeds to Step S164 (Fig. 9). Specifically, the reading of the MMU table 403 has been completed in this case, and thus the flow proceeds to the next.

On the other hand, if it is determined in Step S186 that the level-1 descriptor pointer 203 has not reached the final, the flow returns to Step S183 to repeat the processes thereafter. If the processes of Steps S183 to S186 are repeated, and if it is determined in Step S184 that the pointer for the level-2 descriptor table 204 is present in the obtained level-1 descriptor 203, the flow proceeds to Step S187.

In Step S187, it is determined whether or not the pointer for the level-2 descriptor table 204 present in the level-1 descriptor 203 obtained in Step S183 indicates the RAM 102. If it is determined in Step S187 that the pointer for the level-2 descriptor table 204 indicates the RAM 102, the flow proceeds to Step S188. If that the pointer for the level-2 descriptor table 204 does not indicate the RAM 102, is determined, the flow proceeds to Step S185 to repeat the processes thereafter.

In Step S188, the level-2 descriptor table is read. The level-2 descriptor table 204 is stored in the nonvolatile memory 104 as the content of the RAM 102 in the process of Step S115 (Fig. 7), and only the level-2 descriptor table 204 is read from the content stored in the nonvolatile memory 104. Thereafter, the flow proceeds to Step S185 to repeat the processes thereafter.

As described above, the reading of the MMU table is performed.

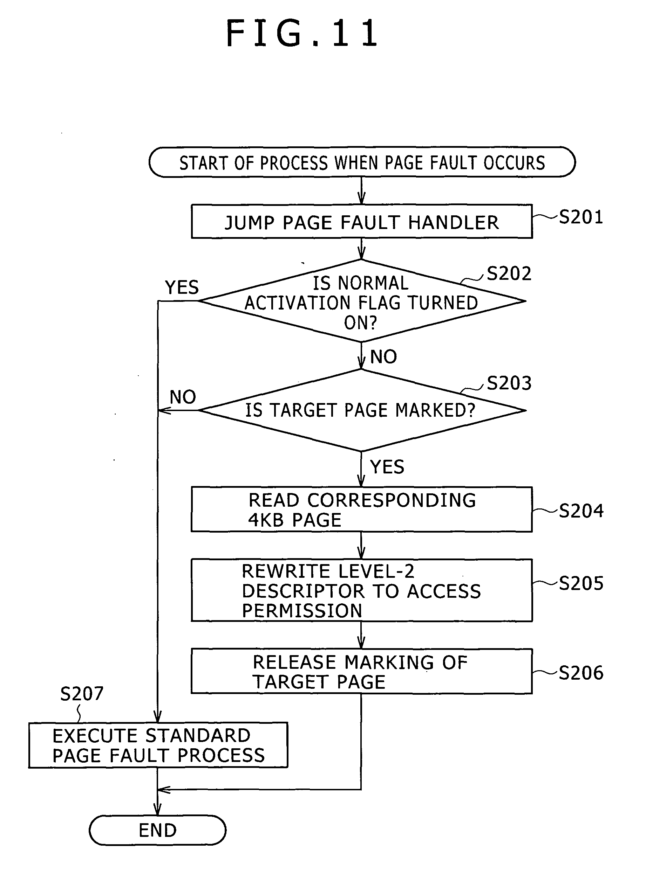

Next, the explanation of processes executed when a page fault occurs will be added with reference to the flowchart of Fig. 11. When a page fault occurs, the process of the CPU 101 jumps to the interrupt vector 405 in Step S201. Specifically, the process of the CPU 101 jumps from the interrupt vector 405 to an interrupt handler that actually performs a page fault process.

If a page fault occurs, the general CPU 101 jumps to a specific interrupt vector as an interrupt process to perform a process as the interrupt handler. The flowchart shown in Fig.11 related to the processes when a page fault occurs assumes the interrupt handler that performs an interrupt process of the page fault. These processes are dependent on the architecture of the CPU 101. It should be noted that the application to the present invention is not limited by the manufacturer and model number of the CPU 101.

In Step S202, it is determined whether or not the normal activation flag is turned on. The normal activation flag is turned on in the process of, for example, Step S104 (Fig. 7). If it is determined in Step S202 that the normal activation flag is turned on, in other words, if it is determined that the normal activation is performed, the flow proceeds to Step S207. On the other hand, if it is determined in Step S202 that the normal activation flag is not turned on, in other words, if it is determined that the high-speed activation is performed, the flow proceeds to Step S203.

In Step S203, it is determined whether or not the target physical page 207, namely, the physical page 207 corresponding to the address where the page fault has occurred is the physical page 207 that has been marked. The marking is executed in the process of Step S142 (Fig. 8). Specifically, the marked physical page 207 is the physical page 207 that has been rewritten into access inhibition by the software to which the present invention is applied.

It should be noted that the physical page 207 and the address generally satisfy the following equation. However, the physical page 207 and the address are dependent on the architecture of the CPU 101, and thus the applicable range of the present invention is not particularly limited to the equation.

$$\texttt{Physical page = address/page size (for example, 4KB in}$$

$$\texttt{above-described example)}$$

As shown by the equation, the physical page is obtained by dividing the address by the page size.

If it is determined in Step S203 that the physical page 207 corresponding to the address where the page fault has occurred is the marked physical page 207, the flow proceeds to Step S204. If it is determined that the physical page 207 corresponding to the address where the page fault has occurred is the physical page 207 that has not been marked, the flow proceeds to Step S207.

In Step S204, 4KB of the target physical page 207, namely, the physical page 207 corresponding to the address where the page fault has occurred is read from the images stored in the nonvolatile memory 104 in the process of Step S115 (Fig. 7).

In Step S205, the access permission bit 305 of the level-2 descriptor 206 of the target physical page 207, namely, the physical page 207 corresponding to the address where the page fault has occurred is rewritten into access permission. In Step S206, the identification information marked in the process of Step S142 (Fig. 8) is released.

As described above, the high-speed activation can be realized by executing the processes when a page fault occurs.

On the other hand, if it is determined in Step S202 that the normal activation flag is turned on although a page fault has occurred, or if it is determined in Step S203 that the target page is not marked, the flow proceeds to Step S207. In Step S207, a standard page fault process is executed. Specifically, when the normal activation is performed, or when software (an OS or the like) other than that to which the present invention is applied is set as access inhibition, the process of normal activation or the process when access is inhibited is executed.

If an OS or the like is installed in the system to which the present invention is applied, a standard page fault handler is generally implemented. On the contrary, the above-described page fault function is implemented in a system, the page fault process that is supposed to be performed by an OS needs to be executed again in some cases. The process of Step S207 is dependent on a system such as an OS and is not essential. Thus, the process may be omitted in the embodiment.

As described above, the high-speed activation can be realized by executing the processes when a page fault occurs.

[Effects]

As described above, on a computer system equipped with the Memory Management Unit (MMU), or a memory management function corresponding to the MMU, page table entries of the table of the MMU are rewritten so that a page fault occurs at each page that is a minimum unit of the RAM necessary for allowing software to run. Upon activation, the memory images in which not only a function as page-in/page-out that is a well-known technique normally equipped in an OS but also a page fault function is stored are read in page units for a page fault that has occurred at the RAM to be accessed. Accordingly, the following effects can be obtained.

In the first place, the reading capacity of the minimum memory images can be realized. Accordingly, for example, the activation time of a personal computer can be shortened. Specifically, an activation time of several tens of seconds to a few minutes that has been required in the past can be shortened to within a few seconds.

Further, the activation time of digital appliances can be shortened. Some digital appliances (electronic devices) such as TV receivers and hard disk recorders are equipped with OSs (predetermined software). In some devices equipped with predetermined software, the activation time becomes long. However, the activation time of the digital appliances can be shortened by applying the present invention.

Further, the lifetime of a battery can be prolonged. As a conventional method for realizing the high-speed activation, a CPU and a memory are set in a power-saving mode. In this method, electric power is necessary even in the power-saving mode, and the power consumption of the device operated by a battery cannot be ignored. The activation images can be stored in the nonvolatile memory by applying the present invention, and it is not necessary to use a so-called suspend mode (corresponding to a conventional power-saving mode) in which the system is suspended while electric power is supplied to a RAM. As a result, the lifetime of the battery can be significantly prolonged.

Further, the energy saving of home appliances can be realized. In general, it takes time to activate TV receivers, hard disk recorders, and the like. Thus, some are equipped with a "high-speed activation mode". However, in the "high-speed activation mode", the high-speed activation is realized by always supplying electric power in order to activate the home alliances at high speed. Therefore, the electric power is consumed as similar to the time the power is turned on.

However, the activation time can be shortened by applying the present invention. Thus, the home appliances can be activated in time same as or shorter than that required in the "high-speed activation mode" , and it is not necessary to provide the "high-speed activation mode". Thus, it is not necessary to always supply the electric power in the "high-speed activation mode". As a result, the energy saving can be realized.

The programs executed by the computer may be programs whose processes are performed in time series in accordance with the orders described in the specification, or may be programs whose processes are performed in parallel or at necessary timing such as when the programs are called. Further, the present invention can be configured using dedicated hardware. Further, the system described in the specification means the entire system configured using plural devices.

It should be noted that the embodiment of the present invention is not limited to the above-described embodiment, but may be variously changed without departing from the scope of the present invention.

DESCRIPTION OF REFERENCE NUMERALS

100     hard disk recorder
101     CPU
102     RAM
103     ROM
104     nonvolatile memory
105     MPEG encoding/decoding unit
106     tuner
107     HDD interface
108     HDD
109     I/O unit
110     activation mode switching unit

**Claims**

1.  A computer-readable program for a control device having a function of managing memories, the program comprising the steps of:

    rewriting page table entries so that a page fault occurs at each page necessary for operations of predetermined software; and
    sequentially reading the pages at each of which the page fault has occurred by the page table entries when the software is activated.

2.  The program according to claim 1, wherein

after the predetermined software is activated, the page table entries are rewritten, and data, program codes, tables, a page fault handler, an interrupt vector, and a register at the time of activation are stored in the memory.

3. The program according to claim 1, wherein
   among the memories, a RAM stores therein the page table entries to be rewritten, and a nonvolatile memory stores therein the pages to be sequentially read.

4. The program according to claim 1 read by an embedded computer.

5. A control method for a control device having a function of managing memories, the method comprising the steps of:

   rewriting page table entries so that a page fault occurs at each page necessary for operations of predetermined software; and
   sequentially reading the pages at each of which the page fault has occurred by the page table entries when the software is activated.

6. A control device having a function of managing memories, the device comprising:

   means for rewriting page table entries so that a page fault occurs at each page necessary for operations of predetermined software; and
   means for sequentially reading the pages at each of which the page fault has occurred by the page table entries when the software is activated.

# FIG.1

EP 2 439 639 A1

# FIG.2

EP 2 439 639 A1

# FIG.3

| BASE ADDRESS | ATTRIBUTE | ATTRIBUTE | ············ | ATTRIBUTE | ACCESS PERMISSION |

301 302 303 304 305

EP 2 439 639 A1

# FIG.4

| | |
|---|---|
| 0 | ~207-0 |
| 1 | ~207-1 |
| 2 | ~207-2 |
| 3 | ~207-3 |
| 4 | ~207-4 |
| 5 | ~207-5 |
| 6 | ~207-6 |
| 7 | ~207-7 |
| 8 | ~207-8 |
| 9 | ~207-9 |
| 10 | ~207-10 |
| 11 | ~207-11 |
| 12 | ~207-12 |
| 13 | ~207-13 |
| 14 | ~207-14 |
| 15 | ~207-15 |
| 16 | ~207-16 |
| 17 | ~207-17 |
| 18 | ~207-18 |
| 19 | ~207-19 |
| 20 | ~207-20 |

⋮

| | |
|---|---|
| n | ~207-n |

# FIG.5

| | |
|---|---|
| 0 | ~207-0 |
| | ~207-1 |
| 2 | ~207-2 |
| | ~207-3 |
| 4 | ~207-4 |
| 5 | ~207-5 |
| | ~207-6 |
| | ~207-7 |
| | ~207-8 |
| 9 | ~207-9 |
| | ~207-10 |
| | ~207-11 |
| | ~207-12 |
| | ~207-13 |
| | ~207-14 |
| | ~207-15 |
| 16 | ~207-16 |
| | ~207-17 |
| 18 | ~207-18 |
| | ~207-19 |
| | ~207-20 |

⋮

| | |
|---|---|
| | ~207-n |

# FIG.6

| | |
|---|---|
| NONVOLATILE MEMORY | 104 |

| | |
|---|---|
| DATA | 401 |
| PROGRAM CODE | 402 |
| MMU TABLE | 403 |
| PAGE FAULT HANDLER | 404 |
| INTERRUPT VECTOR | 405 |
| IMAGE STORAGE PROGRAM | 406 |
| IMAGE RETURN PROGRAM | 407 |
| BOOTLOADER | 408 |

# FIG.7

(7-1)

START OF ACTIVATION

POWER ON OR RESET — S101

ACTIVATE BOOTLOADER — S102

IS S103
NORMAL ACTIVATION SWITCH TURNED ON? — NO → (1)

YES

TURN ON NORMAL ACTIVATION FLAG — S104

ACTIVATE OS AND INITIALIZE MMU — S105

ACTIVATE SOFTWARE — S106

(2)

RUN SOFTWARE — S107

HAS S108
PROCESS OF IMAGE STORAGE PROGRAM STARTED? — NO

YES

STORE I/O REGISTER — S109

STORE CPU REGISTER — S110

SWITCH ADDRESS SPACE VIRTUAL → PHYSICAL — S111

EXECUTE CACHE FLASH — S112

MMU TABLE REWRITING PROCESS — S113

EXECUTE CACHE FLASH — S114

STORE IMAGE — S115

POWER OFF OR RESET — S116

END

# FIG.8

**(7-2)**

START OF MMU TABLE REWRITING PROCESS

ASSIGN INITIAL ADDRESS OF LEVEL-1 DESCRIPTOR TABLE TO LEVEL-1 DESCRIPTOR POINTER — S131

OBTAIN LEVEL-1 DESCRIPTOR USING ADDRESS INDICATED BY LEVEL-1 DESCRIPTOR POINTER — S132

S133 — IS POINTER FOR LEVEL-2 DESCRIPTOR TABLE PRESENT IN LEVEL-1 DESCRIPTOR? — YES

NO

MOVE LEVEL-1 DESCRIPTOR POINTER TO NEXT ADDRESS — S134

S135 — HAS LEVEL-1 DESCRIPTOR POINTER REACHED FINAL? — NO

YES

RETURN

MOVE LEVEL-2 DESCRIPTOR POINTER TO INITIAL ADDRESS OF LEVEL-2 DESCRIPTOR TABLE — S136

OBTAIN LEVEL-2 DESCRIPTOR USING ADDRESS INDICATED BY LEVEL-2 DESCRIPTOR POINTER — S137

S138 — IS PHYSICAL PAGE PRESENT IN LEVEL-2 DESCRIPTOR — NO
YES

S139 — IS LEVEL-2 DESCRIPTOR INDICATING RAM? — NO
YES

S140 — HAS ACCESS TO PHYSICAL PAGE BEEN PERMITTED? — NO
YES

REWRITE LEVEL-2 DESCRIPTOR TO ACCESS INHIBITION — S141

MARK REWRITTEN LEVEL-2 DESCRIPTOR — S142

MOVE LEVEL-2 DESCRIPTOR POINTER TO NEXT ADDRESS — S143

S144 — HAS LEVEL-2 DESCRIPTOR POINTER REACHED FINAL? — YES
NO

EP 2 439 639 A1

# FIG.9

(7-3)

```
              ( 1 )
                │
                ▼
┌──────────────────────────┐
│     TURN OFF NORMAL      │── S161
│     ACTIVATION FLAG      │
└──────────────────────────┘
                │
                ▼
┌──────────────────────────┐
│   READ INTERRUPT VECTOR  │── S162
│  AND PAGE FAULT HANDLER  │
└──────────────────────────┘
                │
                ▼
┌──────────────────────────┐
│   MMU TABLE READING      │── S163
│   PROCESS                │
└──────────────────────────┘
                │
                ▼
┌──────────────────────────┐
│   SWITCH ADDRESS SPACE   │── S164
│   PHYSICAL → VIRTUAL     │
└──────────────────────────┘
                │
                ▼
┌──────────────────────────┐
│    RETURN CPU REGISTER   │── S165
└──────────────────────────┘
                │
                ▼
┌──────────────────────────┐
│    RETURN I/O REGISTER   │── S166
└──────────────────────────┘
                │
                ▼
              ( 2 )
```

(7-4)

FIG.10

```
      ( START OF MMU TABLE READING PROCESS )
                        │
                        ▼
      ┌──────────────────────────────────┐
      │   READ LEVEL-1 DESCRIPTOR TABLE   │─── S181
      └──────────────────────────────────┘
                        │
                        ▼
      ┌──────────────────────────────────┐
      │ ASSIGN INITIAL ADDRESS OF LEVEL-1 DESCRIPTOR │─── S182
      │ TABLE TO LEVEL-1 DESCRIPTOR POINTER          │
      └──────────────────────────────────┘
                        │
                        ▼
      ┌──────────────────────────────────┐
      │ OBTAIN LEVEL-1 DESCRIPTOR USING ADDRESS │─── S183
      │ INDICATED BY LEVEL-1 DESCRIPTOR POINTER │
      └──────────────────────────────────┘
                        │
                        ▼
                  S184
            IS POINTER FOR
       LEVEL-2 DESCRIPTOR TABLE PRESENT      ──YES──▶
          IN LEVEL-1 DESCRIPTOR?
                        │ NO
                        ▼
      ┌──────────────────────────────────┐
      │ MOVE LEVEL-1 DESCRIPTOR POINTER TO NEXT ADDRESS │─── S185
      └──────────────────────────────────┘
                        │
                        ▼
                  S186
              HAS LEVEL-1
        DESCRIPTOR POINTER REACHED ──NO──▶
              FINAL?
                        │ YES
                        ▼
                 ( RETURN )
```

S187
IS POINTER FOR
LEVEL-2 DESCRIPTOR TABLE
INDICATING RAM?

NO

YES

READ LEVEL-2 DESCRIPTOR TABLE

S188

EP 2 439 639 A1

# FIG.11

```
( START OF PROCESS WHEN PAGE FAULT OCCURS )
                         │
                         ▼
        ┌──────────────────────────────────┐
        │      JUMP PAGE FAULT HANDLER      │──S201
        └──────────────────────────────────┘
                         │
                         ▼
              ╱────────────────────╲  S202
        YES  ╱       IS NORMAL      ╲
     ◄──────◄  ACTIVATION FLAG TURNED ►
             ╲         ON?           ╱
              ╲────────────────────╱
                         │ NO
                         ▼
              ╱────────────────────╲  S203
        NO   ╱                      ╲
     ◄──────◄   IS TARGET PAGE MARKED? ►
             ╲                      ╱
              ╲────────────────────╱
                         │ YES
                         ▼
        ┌──────────────────────────────────┐
        │      READ CORRESPONDING          │──S204
        │         4KB PAGE                 │
        └──────────────────────────────────┘
                         │
                         ▼
        ┌──────────────────────────────────┐
        │      REWRITE LEVEL-2             │
        │   DESCRIPTOR TO ACCESS           │──S205
        │      PERMISSION                  │
        └──────────────────────────────────┘
                         │
                         ▼
        ┌──────────────────────────────────┐
        │      RELEASE MARKING OF          │──S206
        │       TARGET PAGE                │
        └──────────────────────────────────┘

  S207
  ┌─────────────────────┐
  │  EXECUTE STANDARD    │
  │  PAGE FAULT PROCESS  │
  └─────────────────────┘
            │
            ▼
        ( END )
```

| INTERNATIONAL SEARCH REPORT | International application No. |
|---|---|
| | PCT/JP2010/053627 |

**A. CLASSIFICATION OF SUBJECT MATTER**
*G06F9/445*(2006.01)i, *G06F9/54*(2006.01)i

According to International Patent Classification (IPC) or to both national classification and IPC

**B. FIELDS SEARCHED**

Minimum documentation searched (classification system followed by classification symbols)
G06F9/445, G06F9/54, G06F12/06, G06F12/10

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2007-334383 A (Sony Corp.), 27 December 2007 (27.12.2007), paragraphs [0016] to [0018], [0089] to [0101], [0119] to [0121], [0131] to [0133] & US 2008/0005541 A1 | 1-6 |
| A | JP 2006-202252 A (Canon Inc.), 03 August 2006 (03.08.2006), paragraphs [0040] to [0042], [0049] to [0054] & US 2006/0173925 A1 | 1-6 |
| A | JP 2005-149225 A (Sony Corp.), 09 June 2005 (09.06.2005), paragraphs [0041] to [0052] (Family: none) | 1-6 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 May, 2010 (10.05.10) | 18 May, 2010 (18.05.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005149225 A

- JP 2007334383 A